# EUROPEAN PATENT APPLICATION

(11) **EP 2 986 018 A1**
(43) Date of publication of application: **17.02.2016**
(21) Application number: 15179737.0
(22) Date of filing: 04.08.2015
(51) Int. Cl.: H04N 21/439, G06F 17/30, H04N 21/482

(54) **ELECTRONIC DEVICE AND METHOD FOR PROVIDING INFORMATION RELATED TO MEDIA CONTENT**

(30) Priority: 13.08.2014 KR 20140105150
(71) Applicant: Samsung Electronics Co., Ltd., Gyeonggi-do 16677 (KR)
(72) Inventor: JIN, Pyeonggyu, 16677 Gyeonggi-do (KR); CHOI, Hayoung, 16677 Gyeonggi-do (KR)
(74) Representative: Jenkins, Richard Gavin

(57) **Abstract**

A method and an electronic device for providing media content-related information are provided. The method includes decoding the media content when an input for playing the media content is received, obtaining sample data from audio data created from the decoded media content, searching through database to find music data having a substantially similar data pattern in comparison with the sample data, and acquiring information related to the found music data.

## Description

### TECHNICAL FIELD

The present disclosure relates to a method for providing information related to media content being played and an electronic device for implementing the method.

### BACKGROUND

Media content is associated with content of any information service utilized in a system or service that allows various types of information such as text, audio, video, etc. to be created, delivered and processed.

With a recent growth of high-speed Internet and digital technologies, a media content industry has developed. Specifically, an industry dedicated to creating, processing, protecting, distributing, and servicing digital content to users. Digital content can include various media and content including movies, games, e-books, and the like and may be distributed through a communication network, a digital broadcast network, digital storage media, or the like.

With the increase in media content consumption, various content transmission techniques and access options have been introduced. For example, multimedia signal processing and transmission technologies including a portable-type TV service such as digital video broadcasting-handheld (DVB-H) and digital multimedia broadcasting (DMB) allow end-users to watch media content in real-time through mobile devices. Alternatively, a user may download and/or store high-capacity media content in a memory of a mobile device to access at a user's convenience. In addition, a user may access media content using a streaming service where the content is provided on-demand to a user through a network.

However, content providers (e.g., original content creators or uploading entities) control what information a user may readily obtain. For example, when a single video includes several songs of a specific singer, a user may be able to determine the songs contained in the video based on a name of the file, but cannot determine any detailed information about a song while the video is playing in real-time.

In other words, while media content is being played, a user may discern information inputted by the content providers at the time of creation or upload of content. However, it is not possible to obtain detailed information regarding the content while the content is being consumed.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method for providing media content-related information and also an electronic device for implementing the method.

In accordance with an aspect of the present disclosure, a method for providing information related to media content in an electronic device is provided. The method includes decoding the media content when an input for playing the media content is received, obtaining sample data from audio data created from the decoded media content, searching through database to find music data having a substantially similar data pattern in comparison with the sample data, and acquiring information related to the found music data.

In accordance with another aspect of the present disclosure, an electronic device is provided. The electronic device includes a user interface unit configured to receive an input for playing media content and output a playback screen of the media content, and a control unit configured to decode the media content, obtain sample data from audio data created from the decoded media content, search through database to find music data having a substantially similar data pattern in comparison with the sample data, and acquire information related to the found music data.

In accordance with another aspect of the present disclosure, a computer-readable storage medium recording thereon a program for executing is provided. The computer-readable storage medium recording thereon a program includes decoding the media content when an input for playing the media content is received, obtaining sample data from audio data created from the decoded media content, searching through database to find music data having a substantially similar data pattern in comparison with the sample data, and acquiring information related to the found music data.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating an electronic device according to an embodiment of the present disclosure.
FIG. 2 is a block diagram illustrating the decoder unit shown in FIG. 1 according to an embodiment of the present disclosure.
FIG. 3 is a flow diagram illustrating a method for providing information related to media content according to an embodiment of the present disclosure.
FIG. 4 is a diagram illustrating a separation process of music data according to an embodiment of the present disclosure.
FIG. 5 is a diagram illustrating a search process of music data according to various embodiments of the present disclosure.
FIG. 6 is a screenshot illustrating related information offered during the playback of media content according to an embodiment of the present disclosure.

The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The expressions such as "include" and "may include" which may be used in various embodiments of the present disclosure denote the presence of the disclosed functions, operations, and constituent elements and do not limit one or more additional functions, operations, and constituent elements. Additionally, in various embodiments of the present disclosure, the terms such as "comprise", "include", and/or "have" may be construed to denote a certain characteristic, number, operation, constituent element, component or a combination thereof, but may not be construed to exclude the existence of or a possibility of addition of one or more other characteristics, numbers, operations, constituent elements, components or combinations thereof.

Furthermore, in various embodiments of the present disclosure, the expression "or" includes any and all combinations of the associated listed words. For example, the expression "A or B" may include A, may include B, or may include both A and B.

In various embodiments of the present disclosure, expressions including ordinal numbers, such as "first" and "second," etc., and/or the like, may modify various elements. However, such elements are not limited by the above expressions. For example, the above expressions do not limit the sequence and/or importance of the elements. The above expressions are used merely for the purpose to distinguish an element from the other elements. For example, a first user device and a second user device indicate different user devices although both of them the first user device and the second user device are user devices. For example, a first element could be termed a second element, and similarly, a second element could be also termed a first element without departing from the scope of the present disclosure.

In the case where according to which a component is referred to as being "connected" or "accessed" to another component, it should be understood that not only the component is directly connected or accessed to the other component, but also there may exist another component between them the component and the other component. Meanwhile, in the case where according to which a component is referred to as being "directly connected" or "directly accessed" to other component, it should be understood that there is no component there between.

The terms used in the present disclosure are only used to describe specific various embodiments, and are not intended to limit the present disclosure.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

An electronic device according to this disclosure may be a device that involves a display function. For example, an electronic device may be a smart phone, a tablet personal computer (PC), a mobile phone, a video phone, an e-book reader, a desktop PC, a laptop PC, a netbook computer, a personal digital assistant (PDA), a portable multimedia player (PMP), an moving picture experts group (MPEG) audio layer 3 (MP3) player, a portable medical device, a digital camera, or a wearable device (e.g., an head-mounted device (HMD) such as electronic glasses, electronic clothes, an electronic bracelet, an electronic necklace, an electronic appcessory, or a smart watch).

According to various embodiments, an electronic device may be a smart home appliance that involves a display function. For example, an electronic device may be a TV, a digital Versatile disc (DVD) player, audio equipment, a refrigerator, an air conditioner, a vacuum cleaner, an oven, a microwave, a washing machine, an air cleaner, a set-top box, a TV box (e.g., SAMSUNG HOMESYNC, APPLE TV, GOOGLE TV, etc.), a game console, an electronic dictionary, an electronic key, a camcorder, or an electronic picture frame.

According to various embodiments, an electronic device may be a medical device (e.g., magnetic resonance angiography (MRA), magnetic resonance imaging (MRI), computed tomography (CT), ultrasonography, etc.), a navigation device, a global positioning system (GPS) receiver, an event data recorder (EDR), an flight data recorder (FDR), a car infotainment device, electronic equipment for ship (e.g., a marine navigation system, a gyrocompass, etc.), avionics, security equipment, an industrial or home robot, an automatic teller's machine (ATM), or a point of sales (POS).

According to various embodiments, an electronic device may be furniture or part of a building or construction having a display function, an electronic board, an electronic signature receiving device, a projector, or various measuring instruments (e.g., a water meter, an electric meter, a gas meter, a wave meter, etc.). An electronic device disclosed herein may be one of the above-mentioned devices or any combination thereof. Also, an electronic device disclosed herein may be a flexible device.

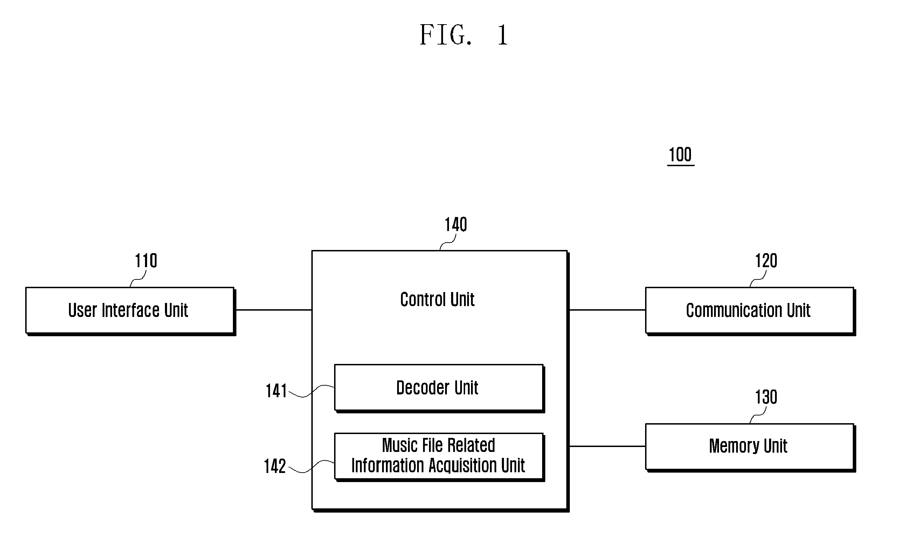

FIG. 1 is a block diagram illustrating an electronic device 100 according to an embodiment of the present disclosure.

Referring to FIG. 1, the electronic device 100 may include a user interface unit 110, a communication unit 120, a memory unit 130, and a control unit 140. Electronic device 100 is configured to perform various functions including play media content in response to various types of user input.

The user interface unit 110 may include a user input unit (not shown) for receiving a user's input and a display unit (not shown) for outputting a processing result of the electronic device 100. For example, a user input device can include one or more peripherals such as a keyboard, a mouse, etc. In addition, the user input unit may further include a camera, a microphone, and/or various sensors.

In an exemplary embodiment, the user interface unit 110 may include a touch screen that performs both a touch input receiving operation and a display operation. The touch screen may include a touch panel, which may create an input signal in response to a gesture on a screen of the display unit. In this embodiment, the touch screen may create an input signal for playing selected media content in response to a user's touch input.

The display unit may display thereon media content which is being played under the control of the control unit 140. The display unit may include a display panel such as liquid crystal display (LCD), active matrix organic light emitting diode (AMOLED), a flexible display, a transparent display, or the like. Additionally, the display unit may further include a speaker, a lamp, or the like. For example, when the media content being played is a video, video data may be outputted through the display panel and audio data may be outputted through the speaker. Also, an alarm or the like may be outputted through the lamp.

The communication unit 120 may support a network function based on a short range communication protocol (e.g., wireless fidelity (Wi-Fi), Bluetooth (BT), near field communication (NFC), etc.) or a network communication (e.g., Internet, local area network (LAN), wide area network (WAN), telecommunication network, cellular network, satellite network, plain old telephone service (POTS), etc.).

The memory unit 130 may store therein various data including applications required for the operation of the electronic device 100. The memory unit 130 may include a program region and a data region. The program region may store therein an operating system (OS), programs, applications, and the like. Each program or application stored in the program region may offer a particular function under the control of the control unit 140. The data region may store therein default data and other data created or received during the use of the electronic device 100. In this embodiment, the program region may store a specific application for playing media content, and the data region may store various music data and related information.

The control unit 140 is configured to control an overall function to play selected media content in response to an input signal for playing the media content. The control unit 140 may play media content downloaded and stored in the memory unit 130, and may also play media content offered by means of a streaming service through the communication unit 120. Hereinafter, for clarity and ease of description media content refers to a video file having video data and audio data. However, one of ordinary skill in the art would recognize that media content may include only video data, only audio data, metadata, etc.

When an input for playing specific media content is detected, the control unit 140 may decode and play the specific media content. As the result of decoding, the media content may be separated into video data and audio data, which may be synchronized with each other. Therefore, a user can perceive the media content being played through the electronic device 100.

The control unit 140 according to this embodiment may obtain sample data by sampling music data contained in the audio data and then search through a database to find music data having a substantially similar data pattern in comparison with the sample data. This sampling may be performed according to a predetermined condition or using the result of decoding. The database may be stored in the memory unit 130 or offered through a network from the outside of the electronic device 100. If any music data which is substantially similar in data pattern to the sample data is found in the database, the control unit 140 may retrieve related information of the music data. This related information may be stored together with the music data in the database. Additionally, the control unit 140 may output the retrieved related information through the user interface unit 110. Such related information may be outputted, for example, on a playback screen, especially displayed in a certain region associated with a progress bar on the playback screen. According to various embodiments, such a region associated with the progress bar may include a region of the progress bar, a region above the progress bar, or a region below the progress bar. In an embodiment, the related information may be displayed in a particular region associated with a current playback time point on the progress bar.

According to an embodiment, the control unit 140 may include therein a decoder unit 141 and a music file related information acquisition unit 142.

The decoder unit 141 may perform a function to decode and play selected media content.

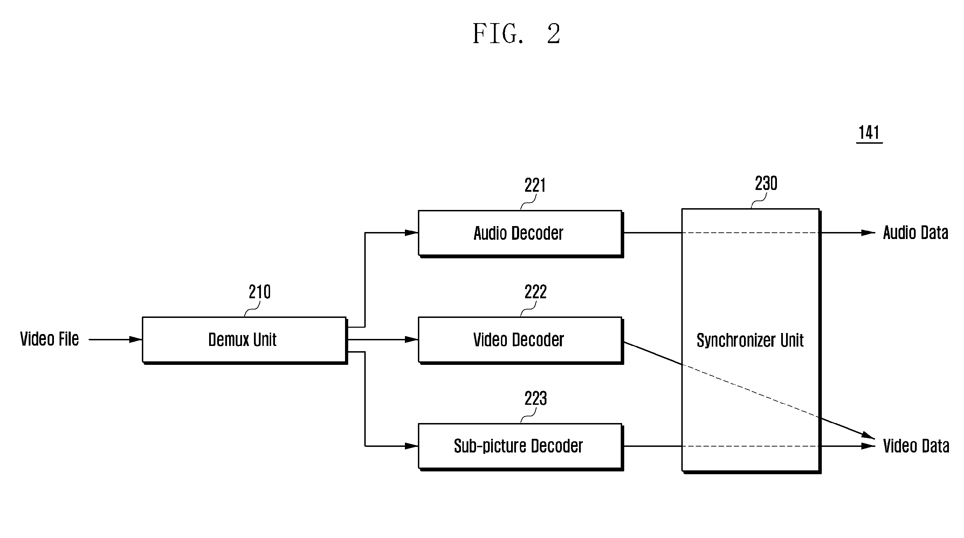

FIG. 2 is a block diagram illustrating the decoder unit shown in FIG. 1 according to an embodiment of the present disclosure.

Referring to FIG. 2, the decoder unit 141 may include a demultiplexer (usually abbreviated to demux) unit 210, an audio decoder 221, a video decoder 222, a sub-picture decoder 223, and a synchronizer unit 230.

The demultiplexer unit 210 is configured to separate components of media content, e.g., audio, video and/or sub-picture contained in the media content. The audio decoder 221 may decode the separated audio, the video decoder 222 may decode the separated video, and the sub-picture decoder 223 may decode the separated sub-picture. The synchronizer unit 230 may adjust the synchronization of the decoded audio, video, and sub-picture then output the decoded audio as audio data, and output the decoded video and sub-picture as video data. Namely, selected media content may be decoded through the decoder unit 141 and provided visually and/or audibly to a user.

Although not shown in the drawings, the decoder unit 141 may also decode media content-related information stored in a header of media content. Such media content-related information may include, for example, a title, a creator, a creation date, a file type (e.g., a music file, a video file, etc.), a running time, and the like.

The music file related information acquisition unit 142 is configured to obtain sample data by sampling music data contained in the decoded audio data and then search through a database to find music data having a substantially similar data pattern in comparison with the sample data. For example, a music search condition may be determined using the result of decoding and the sample data may be obtained by sampling the music data in the audio data according to the determined music search condition.

One example of determining a music search condition is as follows. In case any media content such as a movie file contains both speech data and music data in the audio data, the music file related information acquisition unit 142 may request a music search to distinguish the waveform of music data from the waveform of speech data and then to detect a time point in which the waveform of speech data is changed to the waveform of music data. This is to acquire information related to music data when a part of music data is played during the playback of media content. In response to a request for a music search, the music data can be separated from the speech data and then sampled in a certain length.

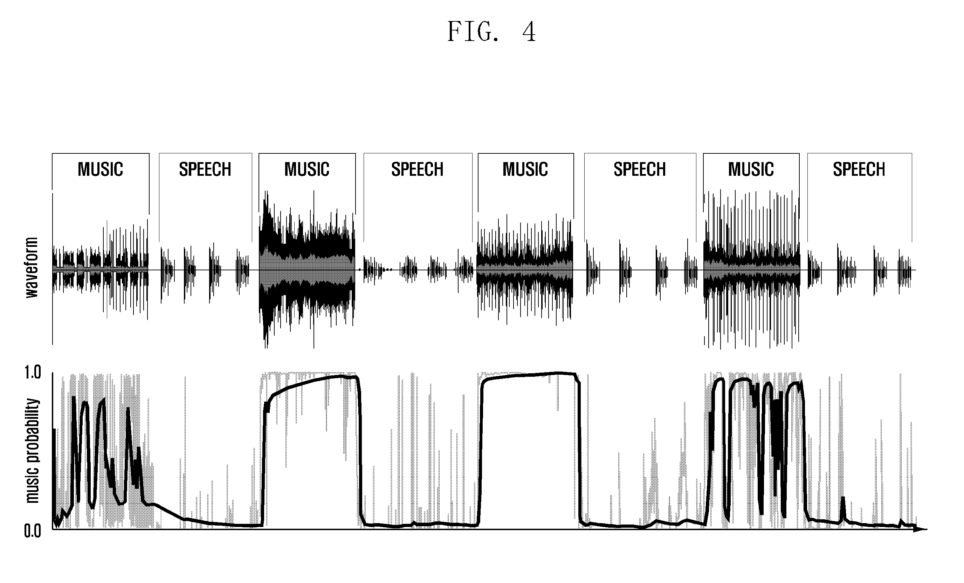

FIG. 4 is a diagram illustrating a separation process of music data according to an embodiment of the present disclosure.

Referring to FIG. 4, music data can be separated from speech data in audio data by using a filter. In an exemplary embodiment, sampled music data may be stored as sample data in a buffer. The music file related information acquisition unit 142 may search through a database to find music data having a substantially similar data pattern in comparison with the sample data, retrieve related information of the music data, and then output the retrieved related information through the user interface unit 110. According to this embodiment, a user who is watching a movie through the electronic device 100 can obtain information about a song, e.g., a song title, singer information, album information, etc., whenever each song is played.

In another example of determining a music search condition, the music file related information acquisition unit 142 may determine a music search request interval according to user's setting or based on a running time determined by the result of decoding. For example, a music search request interval may be determined in proportion to a running time. In this case, music data may be sampled in a given length at regular intervals until the end of playback.

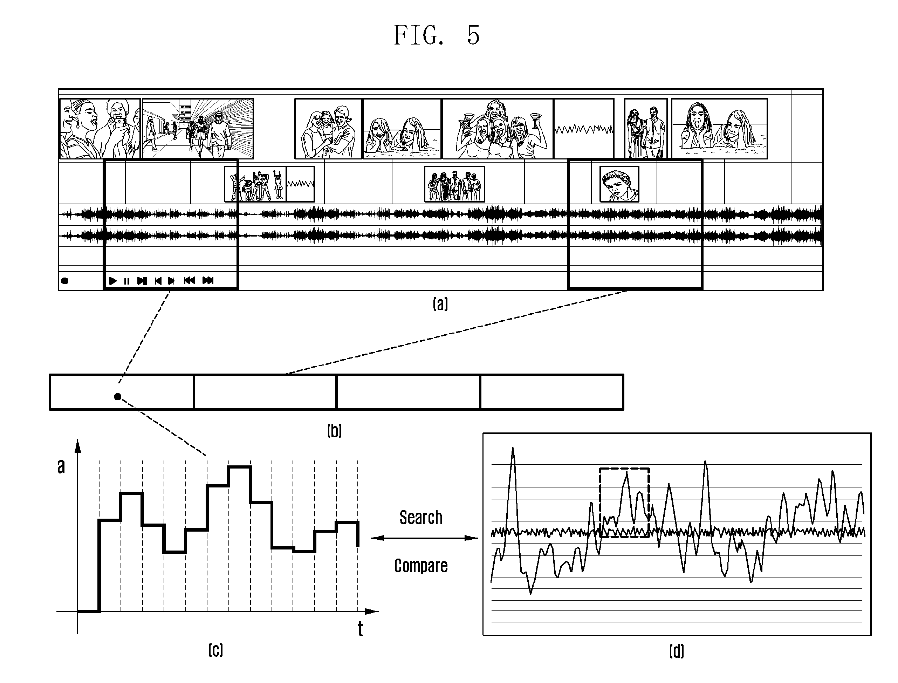

FIG. 5 illustrates a search process of music data according to various embodiments of the present disclosure.

The music file related information acquisition unit 142 illustrated in FIG. 1 may search through a database to find music data having a substantially similar data pattern in comparison with the sample data at regular intervals, retrieve related information of the music data, and then output the retrieved related information through the user interface unit 110.

Referring to FIG. 5, (a) shows an example of sampling music data at regular intervals, and (b) shows an example of sample data stored in a buffer. This stored sample data may have a waveform as shown in (c), and the music file related information acquisition unit 142 may find a waveform being substantially similar to that of the sample data from music data stored in database as shown in (d). If any music data having the substantially similar waveform is found, related information of the found music data may be retrieved and outputted through the screen. In an exemplary embodiment, a user watching media content having a plurality of music data through the electronic device 100 may obtain or perceive information about a song, e.g., a song title, singer information, album information, etc., through the screen at regular intervals.

In addition, the music file related information acquisition unit 142 may determine a music search condition according to initial setting or user's setting.

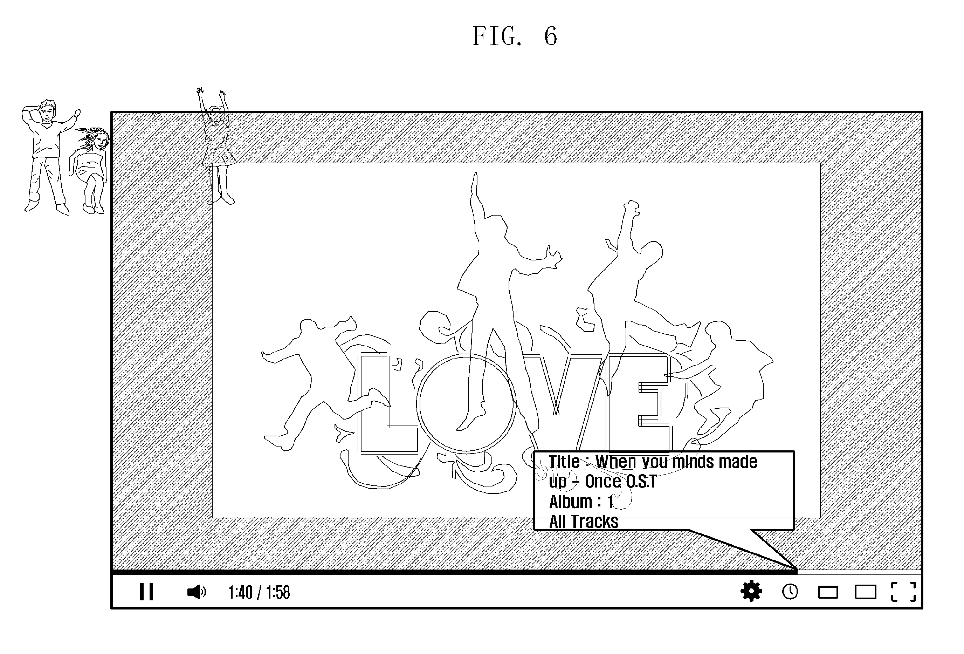

According to an embodiment, related information retrieved by the music file related information acquisition unit 142 may be displayed at a current playback point of a progress bar on the screen as shown in FIG. 6.

FIG. 6 is a screenshot illustrating related information offered during the playback of media content according to an embodiment of the present disclosure.

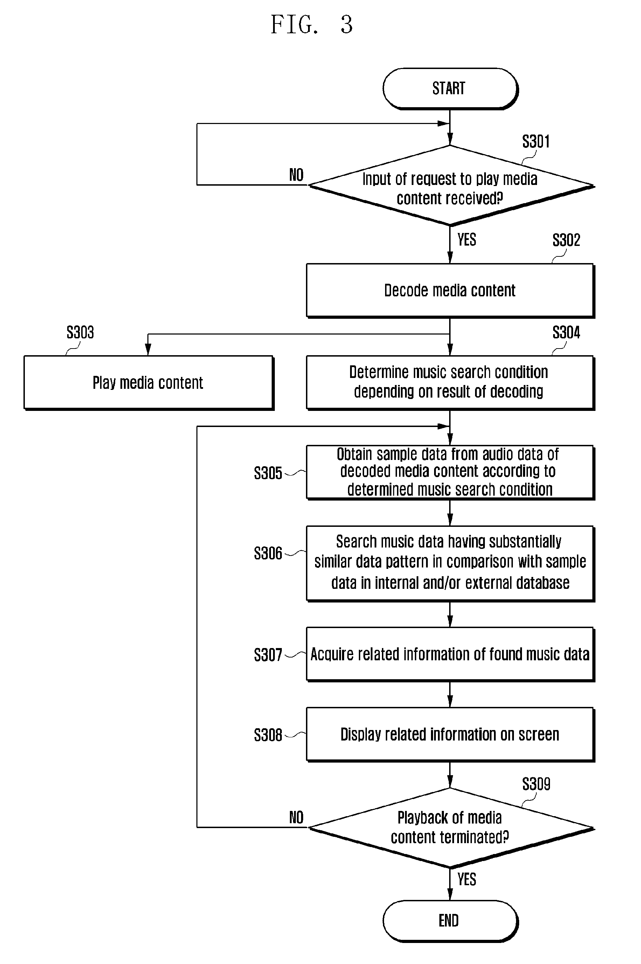

FIG. 3 illustrates a flow diagram of an exemplary method for providing information related to media content according to an embodiment of the present disclosure. The method will be discussed with reference to the exemplary electronic device 100 illustrated in FIG. 1 and the exemplary decoder unit 141 illustrated in FIG. 2. However, the method can be implemented with any suitable electronic device. In addition, although FIG. 3 depicts steps performed in a particular order for the purposes of illustration and discussion, the methods discussed herein are not limited to any particular order or arrangement. One skilled in the art, using the disclosures provided herein, will appreciate that various steps of the methods can be omitted, rearranged, combined, and/or adapted in various ways.

Referring to FIG. 3, at operation S301, the electronic device 100 may check whether an input associated with a request to play specific media content is received. When any playback input is received, the electronic device 100 may decode the media content at operation S302. The decoded media content may be played and thereby offered to a user at operation S303. For example, video data may be offered visually through the screen, and audio data may be offered visually through audibly using the user interface unit 110.

Meanwhile, at operation S304, the electronic device may determine a music search condition depending on the result of decoding. In an exemplary embodiment, a music search is initiated when a change from the waveform of speech data to the waveform of music data is detected. In another exemplary embodiment, a music search is set to occur at a predetermined interval based on a running time of the music content. Other techniques may be used to determine a music search condition.

After a music search condition is determined, the electronic device 100 may obtain sample data from audio data of the decoded media content at operation S305 according to the determined music search condition. For example, at a time point when there is a request for a music search according to a music search condition, sample data may be created by sampling music data contained in audio data in a given length. In an exemplary embodiment, the created sample data may be stored temporarily in a buffer.

Thereafter, at operation S306, music data having the substantially similar data pattern in comparison with the sample data may be searched in an internal and/or an external database. If any similar music data is found, related information of the found music data may be acquired at operation S307 and then displayed on the screen at operation S308. For example, such related information may be displayed in connection with a progress bar on the screen. The electronic device may determine at operation S309 whether the playback of media content is terminated, and may repeatedly perform a process from operation S305 until the playback is terminated.

According to embodiments discussed herein, when media content is being played, information related to data of a current playback time point can be retrieved and offered in real time. For example, when media content is a compilation of a plurality of music sources, information related to specific music being played currently may be offered.

Additionally, according to various embodiments, if any music data is played during the execution of media content, such music data may be identified and also related information may be offered.

According to various embodiments, at least part of the electronic device 100 or the method according to the present disclosure may be implemented by a command stored in a non-transitory computer-readable storage medium in a programming module form. When the command is executed by one or more processors, the one or more processors may execute a function corresponding to the command. The non-transitory computer-readable storage medium may be, for example, a memory unit or a storage unit. At least a part of the programming module may be implemented (e.g., executed) by, for example, the processor. At least a part of the programming module may include, for example, a module, a program, a routine, a set of instructions, and/or a process for performing one or more functions.

The non-transitory computer-readable recording medium may include magnetic media such as a hard disk, a floppy disk, and a magnetic tape, optical media such as a compact disc read only memory (CD-ROM) and a DVD, magneto-optical media such as a floptical disk, and hardware devices specially configured to store and perform a program instruction (for example, e.g., programming module), such as a ROM, a random access memory (RAM), a flash memory and the like. In addition, the program instructions may include high class language codes, which can be executed in a computer by using an interpreter, as well as machine codes made by a compiler. The aforementioned hardware device may be configured to operate as one or more software modules in order to perform the operation of various embodiments of the present disclosure, and vice versa.

A module or programming module according to this disclosure may include or exclude at least one of the above-discussed elements or further include any other element. The operations performed by the module, programming module or any other element according to this disclosure may be executed sequentially, in parallel, repeatedly, or by a heuristic method. Additionally, some operations may be executed in different orders or omitted, or any other operation may be added.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for providing information related to media content in an electronic device, the method comprising:
decoding the media content when an input for playing the media content is received;
obtaining sample data from audio data created from the decoded media content;
searching through a database to find music data having a substantially similar data pattern in comparison with the sample data; and
acquiring information related to the found music data.

2. The method of claim 1, further comprising:
playing the decoded media content on a screen; and
displaying the acquired information on the screen, wherein the displaying of the acquired information includes displaying the acquired information in a region associated with a progress bar on the screen.

3. The method of claim 1, wherein the obtaining of the sample data includes:
determining a music search condition by using a result of the decoding of the media content; and
obtaining the sample data from the audio data by using the determined music search condition, and wherein the decoding of the media content includes at least one of:
identifying a type of the media content;
identifying a running time of the media content; and
extracting the audio content from the media content.

4. The method of claim 3, wherein the determining of the music search condition includes requesting a music search when a change from a waveform of speech data to a waveform of music data is detected when the audio data of the media content has speech data and music data, and wherein the obtaining of the sample data includes:
separating the music data from the audio data when the audio of the media content has the speech data and the music data; and
obtaining the sample data from the separated music data in response to a request for the music search.

5. The method of claim 3, wherein the determining of the music search condition includes determining a music search request interval.

6. The method of claim 8, wherein at least one of the following applies:
the music search request interval is based on the identified running time; and the obtaining of the sample data is obtained from the music data contained in the audio data of the media content based on the determined music search request interval.

7. The method of claim 1, wherein the searching of the data base is performed through at least one of an internal database of the electronic device and an external database of the electronic device.

8. An electronic device comprising:
a user interface unit configured to:
receive an input for playing media content, and
output a playback screen of the media content; and
a control unit configured to:
decode the media content,
obtain sample data from audio data created from the decoded media content,
search through a database to find music data having a substantially similar data pattern in comparison with the sample data, and
acquire information related to the found music data.

9. The electronic device of claim 8, wherein the control unit is further configured to:
play the decoded media content on a screen, and
display the acquired information on the screen.

10. The electronic device of claim 9, wherein the user interface unit is further configured to display the acquired information in a region associated with a progress bar on the screen.

11. The electronic device of claim 8, wherein the control unit is further configured to:
determine a music search condition by using a result of the decoding operation, and
obtain the sample data from the audio data by using the determined music search condition.

12. The electronic device of claim 11, wherein the control unit is further configured to, as the decoding operation of the media content, at least one of:
identify a type of the media content,
identify a running time of the media content, or
extract the audio content from the media content.

13. The electronic device of claim 12, wherein the control unit is further configured to:
request a music search when a change from a waveform of speech data to a waveform of music data is detected when the audio data of the media content includes speech data and music data,
separate the music data from the audio data, and
obtain the sample data from the separated music data in response to a request for the music search.

14. The electronic device of claim 12, wherein the control unit is further configured to:
determine a music search request interval based on at least one of user's setting or the identified running time, and
obtain the sample data from the music data contained in the audio data of the media content based on the determined music search request interval.

15. The electronic device of claim 8, wherein the control unit is further configured to perform the music data search through at least one of an internal database of the electronic device and an external database of the electronic device.
